# EUROPÄISCHE PATENTSCHRIFT

(11) **EP 3 725 143 B1**
(45) Veröffentlichungstag und Bekanntmachung des Hinweises auf die Patenterteilung: **07.06.2023**
(21) Anmeldenummer: 20151429.6
(22) Anmeldetag: 13.01.2020
(51) Int. Cl.: A01B 71/02, A01B 76/00, A01B 69/04

(54) **BERÜHRUNGSLOS STEUERBARES FAHRZEUG**
VEHICLE CONTROLLABLE WITHOUT CONTACT
VÉHICULE POUVANT ÊTRE COMMANDÉ SANS CONTACT

(30) Priorität: 17.04.2019 DE 102019002816
(43) Veröffentlichungstag der Anmeldung: 21.10.2020
(73) Patentinhaber: CLAAS E-Systems GmbH, 49201 Dissen (DE)
(72) Erfinder: Reinecke, Max, 33775 Versmold (DE); Heydekorn, Jens, 33428 Harsewinkel (DE); Weichert, Arne, 49324 Melle (DE)
(74) Vertreter: CLAAS Gruppe

(56) Entgegenhaltungen:
- EP-A1- 3 089 493
- EP-A1- 3 355 670
- EP-B1- 3 355 670
- DE-A1- 10 217 398
- US-A1- 2014 309 876
- US-A1- 2018 079 427

## Beschreibung

Die vorliegende Erfindung betrifft ein Fahrzeug, insbesondere eine fahrbare Landmaschine wie etwa ein Traktor, ein Mähdrescher, ein Feldhäcksler oder dergleichen, bei dem wenigstens ein Teil der Funktionen des Fahrzeugs gesteuert werden können, ohne dass dafür ein direkter Körperkontakt eines Fahrers mit einem Lenkrad, Steuerknüppel, Fahrpedal oder dergleichen notwendig ist.

Aus DE 10 2004 032 642 A1 ist eine fahrbare Landmaschine bekannt, die zum Verteilen von Saatgut und Dünger einsetzbar ist. Bei einem solchen Fahrzeug besteht das Problem, dass der Fahrer insbesondere beim Fahren im Vorgewende eine Vielzahl von Aufgaben gleichzeitig oder in enger zeitlicher Folge zu erledigen und damit im Wortsinne alle Hände voll zu tun hat. Deswegen wird in DE 10 2004 032 642 A1 vorgeschlagen, für nicht sicherheitsrelevante Funktionen wie etwa die die Dosierung des zu verteilenden Düngers oder die Bodenbearbeitungstiefe eine Steuerung durch Sprache zu implementieren, die auf vom Fahrer ausgesprochene Befehle reagiert.

DE 10 2016 004 198 A1 beschreibt eine Notbefehlseinrichtung für einen Traktor. Der Traktor weist eine funkbasierte Empfangsstation auf, die mit einem Headset eines Bedieners kommuniziert. Indem das Headset bei Überschreiten eines Grenz-Schalldruckpegels einen Not-Aus-Steuerbefehl sendet, kann der Bediener den Traktor im Notfall auch von außerhalb zum Stehen bringen. Personen, die kein geeignetes Headset tragen, sind daher durch diese herkömmliche Notbefehlseinrichtung nicht wirksam geschützt, und auch ein kundiger Benutzer hat das Problem, dass er keinen Nothalt auslösen kann, wenn er nicht von vornherein mit der Möglichkeit gerechnet und sich dafür mit dem Headset ausgerüstet hat. Die Dokumente US 2018/079427 A1 und EP 3 355 670 A1 beschreiben bekannte Fahrzeuge mit Steuersystemen basierend auf Sprachbefehlen oder Gesten.

Keines dieser bekannten landwirtschaftlichen Fahrzeuge ist in der Lage, ohne ständige Beaufsichtigung durch einen Benutzer zu arbeiten.

Aufgabe der Erfindung ist, ein Fahrzeug, insbesondere eine fahrbare Landmaschine zu schaffen, die es Personen außerhalb des Fahrzeugs ohne den Einsatz technischer Hilfsmittel ermöglicht, Funktionen des Fahrzeugs zu steuern.

Die Aufgabe wird durch den Gegenstand des Anspruchs 1 gelöst, indem bei einem Fahrzeug, insbesondere einer fahrbaren Landmaschine, mit einer Sensorik zum unmittelbaren Erfassen menschlicher Kommunikationssignale und einer Steuereinheit zum Steuern der Bewegung des Fahrzeugs anhand von durch die Sensorik erfassten Kommunikationssignalen die Sensorik am Fahrzeug montiert ist, um die Kommunikationssignale vom Fahrzeug aus zu erfassen, und einen außerhalb des Fahrzeugs liegenden Erfassungsbereich aufweist.

Die Steuereinheit ist somit in der Lage, Signale zu erfassen, die von jeder beliebigen Person im Erfassungsbereich der Sensorik ausgehen; d.h. insbesondere ein Kommunikationssignal, das einen Sicherheitsstopp des Fahrzeugs bewirkt, kann von jeder beliebigen Person ausgehen, die mit dem Fahrzeug in Konflikt geraten könnte.

Die Steuereinheit sollte aber nicht nur eingerichtet sein, um eine Bewegung des Fahrzeugs zu stoppen; vorzugsweise ist sie auch eingerichtet, um die Richtung und/oder Geschwindigkeit einer Bewegung des Fahrzeugs anhand entsprechender Kommunikationssignale eines sich außerhalb des Fahrzeugs aufhaltenden Benutzers quantitativ zu steuern. Eine solche quantitative Steuerung kann darin bestehen, dass der Zahlenwert einer quantitativen Größe wie Fahrtrichtung oder Geschwindigkeit aus einem Kommunikationssignal abgeleitet wird; denkbar ist aber auch, dass aus einem einzelnen Kommunikationssignal ein Befehl zur Durchführung eines Programms mehrerer Funktionen, z.B. zum autonomen Abernten eines Feldes oder zum Verdichten eines Befahrsilos durch das Fahrzeug, zum An- oder Abkoppeln eines Werkzeugs oder dergleichen, abgeleitet und ausgeführt wird.

Zu diesem Zweck ist die Steuereinheit ferner eingerichtet, einen Benutzer als eine Person, die legitimiert ist, durch ein entsprechendes Kommunikationssignal das Fahrzeug in Bewegung zu setzen, von anderen, nicht legitimierten Personen zu unterscheiden, um dasselbe Kommunikationssignal zu ignorieren, wenn es von einer solchen nicht legitimierten Person ausgeht.

Die Sensorik umfasst wenigstens einen bildgebenden, insbesondere optischen, Sensor. Ein solcher Sensor kann eingesetzt werden, um Kommunikationssignale in Form von Gesten zu erfassen, z.B. um eine abwehrende Handbewegung einer Person als Haltebefehl, ein Heranwinken durch einen Benutzer als Befehl, sich in Bewegung zu setzen oder zu beschleunigen, eine wegschiebende Handbewegung als Befehl zum Stehenbleiben oder Verlangsamen oder ein Zeigen oder eine kreisende Handbewegung als Richtungs- oder Lenkbefehl zu interpretieren. Ein Vorteil der Steuerung durch Gesten ist, dass sie unabhängig vom Geräuschpegel in der Umgebung des Fahrzeugs funktioniert; ein Scheinwerfer zum Ausleuchten des Erfassungsbereichs, der eine Erfassung von Kommunikationssignalen durch den bildgebenden Sensor auch im Dunklen erlaubt, kann am Fahrzeug montiert sein.

Die Sensorik umfasst, vorzugsweise in Kombination mit dem bildgebenden Sensor, ferner wenigstens einen akustischen Sensor, um Kommunikation ohne die Notwendigkeit einer Sichtverbindung zu ermöglichen.

Wie bereits oben angedeutet, kann es Steuerbefehle geben, die nur von einem kundigen Benutzer gegeben werden sollten, und solche, die von beliebigen Personen kommen können. Um dem Rechnung zu tragen, ist die Steuereinheit eingerichtet, aus erfassten Kommunikationssignalen Steuerbefehle zu extrahieren, jeden Steuerbefehl in eine von wenigstens zwei Klassen zu klassifizieren und Steuerbefehle einer ersten Klasse unabhängig von der Identität einer Person auszuführen, die die Kommunikationssignale abgegeben hat, und Steuerbefehle einer zweiten Klasse nur auszuführen, wenn eine Person, die die Kommunikationssignale abgegeben hat, hierzu legitimiert ist.

Um die Legitimation einer Person zu überprüfen, zieht die Steuereinheit ein Merkmal einer von dem bildgebenden Sensor gelieferten Abbildung der Person heran. So können z.B. bekannte Verfahren zur biometrischen Gesichtserkennung herangezogen werden, um aus der Abbildung extrahierte Daten mit einem oder mehreren persönlichen Profilen von legitimen Benutzern zu vergleichen.

Denkbar ist auch, einen Benutzer von anderen Personen anhand von veränderlichen Merkmalen zu unterscheiden, z.B. anhand von spezifischen Merkmalen der Kleidung. So muss zwar ein Benutzer, wenn er die Absicht hat, das Fahrzeug zu benutzen, dafür die entsprechende Kleidung tragen, gleichzeitig ist sichergestellt, dass wenn der Benutzer ohne die Absicht, das Fahrzeug zu benutzen und ohne entsprechend gekleidet zu sein, am Fahrzeug vorübergeht, Äußerungen oder Bewegungen des Benutzers nicht als an das Fahrzeug gerichtete Kommunikationssignale fehlinterpretiert werden.

Alternativ oder ergänzend werden auch Merkmale der Stimme einer Person, wie etwa deren spektrale Zusammensetzung, herangezogen, um zu entscheiden, ob die Person als Benutzer legitimiert ist oder nicht.

Um den Verarbeitungsaufwand der Steuereinheit zu minimieren, wenn sich mehrere Personen im Erfassungsbereich aufhalten, kann eine Analyse von Sensordaten darauf, ob sie einen Befehl der zweiten Klasse enthalten, auf die von einem erkannten Benutzer herrührenden Sensordaten eingeschränkt werden.

Wenn die Sensorik wenigstens zwei akustische Sensoren zum Liefern jeweils eines zeitaufgelösten Ausgangssignals umfasst, kann die Steuereinheit eingerichtet sein, die Ausgangssignale mit wenigstens einem wählbaren Zeitversatz zu überlagern und so die Empfindlichkeit für Schallwellen aus einem Teil des Erfassungsbereichs selektiv zu erhöhen.

Wenn ein bildgebender Sensor vorhanden ist, der es erlaubt, die Position einer Person relativ zum Fahrzeug zu erfassen, kann die Steuereinheit eingerichtet sein, den wenigstens einen Zeitversatz anhand der erfassten Position einer Person zu wählen und somit Lautäußerungen dieser Person gegenüber Geräuschen anderer Quellen bevorzugt zu erfassen.

Das Fahrzeug kann seinerseits über eine Kommunikationsschnittstelle zum Erzeugen von durch ein menschliches Sinnesorgan wahrnehmbaren Kommunikationssignalen verfügen, um z.B. Personen im Umkreis des Fahrzeugs eine geplante Bewegung des Fahrzeugs vorab zur Kenntnis zu bringen.

Diese Kommunikationsschnittstelle kann auch vorgesehen sein, um darüber einen extrahierten Steuerbefehl zu signalisieren. So kann der Benutzer im Falle einer Fehlinterpretation umgehend korrigieren; es kann auch vorgesehen sein, dass ein extrahierter und signalisierter Steuerbefehl erst nach ausdrücklicher Genehmigung durch den Benutzer von der Steuereinheit ausgeführt wird.

Die Aufgabe wird ferner gelöst durch ein Verfahren zum Betreiben eines Fahrzeugs, insbesondere eines Fahrzeugs wie oben beschrieben, mit den Schritten
- Erfassen eines menschlichen Kommunikationssignals mittels einer am Fahrzeug montierten Sensorik aus einem außerhalb des Fahrzeugs liegenden Erfassungsbereich,
- Steuern wenigstens der Bewegung des Fahrzeugs anhand des erfassten Kommunikationssignals.

Gegenstand der Erfindung ist ferner ein Computerprogramm-Produkt mit Programmcode-Mitteln, die einen Computer befähigen, als eine Steuereinheit in einem Fahrzeug nach einem der vorhergehenden Ansprüche zu arbeiten. Das Computerprogramm-Produkt kann in einem Speicher des Computers hinterlegt sein, auf einem computerlesbaren Datenträger oder in downloadbarer Form auf einem Server vorliegen.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: eine Seitenansicht eines Fahrzeugs
- Fig.2: eine schematische Draufsicht auf das Fahrzeug und seine Umgebung; und
- Fig. 3: ein Flussdiagramm eines Betriebsverfahrens des Fahrzeugs.

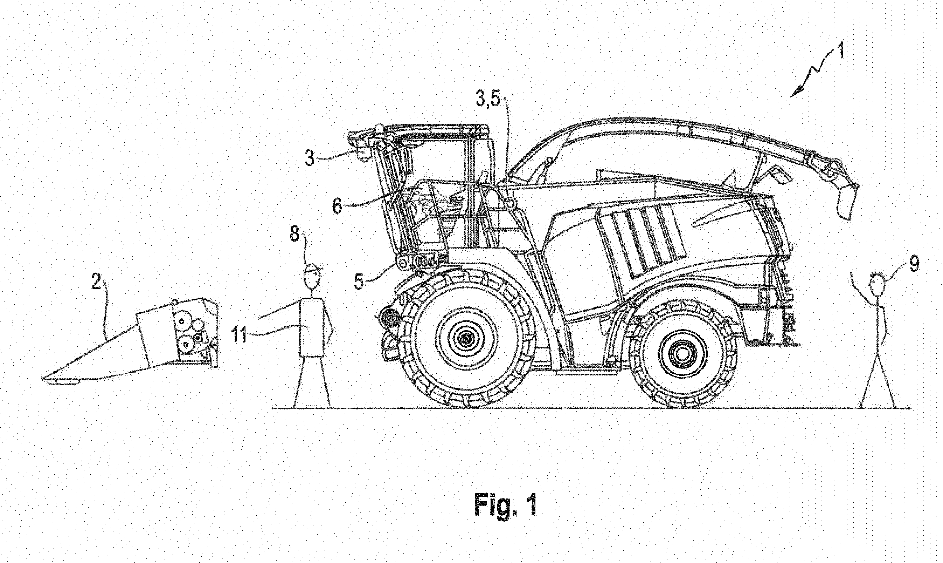

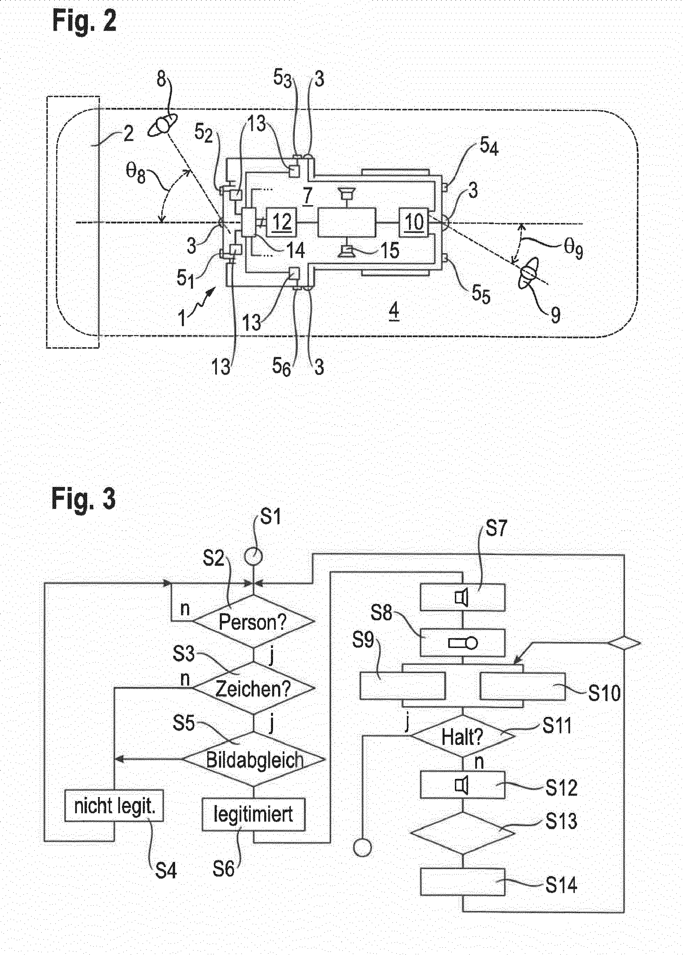

Fig. 1 zeigt als Beispiel für ein erfindungsgemäßes landwirtschaftliches Fahrzeug 1 einen Feldhäcksler. Das Fahrzeug 1 befindet sich auf dem Betriebshof eines Betreibers und muss zur Vorbereitung eines Feldeinsatzes noch ein Erntewerkzeug 2 aufnehmen. An der Karosserie des Fahrzeugs 1 sind bildgebende Sensoren in einer zum vollständigen Überwachen der Umgebung des Fahrzeugs 1 erforderlichen Zahl montiert. Typischerweise sind die bildgebenden Sensoren preiswert verfügbare, für sichtbares Licht empfindliche elektronische Kameras; es können aber auch Radarsensoren o. dgl. verwendet werden. Wie in der Draufsicht der Fig. 2 zu erkennen, bildet die von den bildgebenden Sensoren überwachte Umgebung 4 einen ununterbrochenen Ring rings um das Fahrzeug 1.

Mikrofone 5 sind entlang des Umfangs des Fahrzeugs 1 verteilt, um Schallsignale von jedem Punkt der Umgebung 4 empfangen zu können.

In einer Fahrerkabine 6 des Fahrzeugs 1 sind in üblicher Weise Bedienelemente wie etwa ein Lenkrad, Fahrpedale, ein Steuerknüppel oder dergleichen vorgesehen, die es in einem nichtautonomen Betriebsmodus des Fahrzeugs 1 einem Fahrer ermöglichen, das Fahrzeug 1 von der Kabine 6 aus zu steuern. Ein (in Fig. 1 nicht gezeigter) Bordcomputer 7 unterstützt neben dem nichtautonomen noch einen wenigstens teilweise autonomen Betriebsmodus, in dem er in der Lage ist, über entsprechende Stellglieder das Fahrzeug 1 zu lenken, zu beschleunigen und zu bremsen sowie diverse andere Funktionen wie etwa das An- und Abkoppeln des Werkzeugs 2 oder die Verarbeitung von aufgenommenem Erntegut, hier durch ein Häckselwerk, zu steuern.

Der Bordcomputer 7 ist mit den Kameras 3 verbunden, um Bilddaten von diesen zu empfangen, und verfügt über eine Bildverarbeitungseinheit 10, die es ermöglicht, Personen 8, 9 in der Umgebung 4 zu erkennen und ihnen im Koordinatensystem des Fahrzeugs 1 mindestens eine Azimutalkoordinate, vorzugsweise eine Positionsinformation in zwei Dimensionen, zuzuordnen.

Im hier betrachteten Fall ist die Bildverarbeitungseinheit 10 darüber hinaus eingerichtet, individuelle Merkmale der Personen 8, 9 zu erkennen, z.B. die Gesichter der Personen 8, 9 zu unterscheiden oder zu erkennen, dass die Person 8 Berufskleidung 11 trägt, die Person 9 aber nicht.

Der Bordcomputer 7 verfügt ferner über eine Spracherkennungseinheit 12, die Audiosignale von den Mikrofonen 5 empfängt. Um Sprache sicher zu erkennen, egal aus welcher Richtung sie kommt, verfügt die Spracherkennungseinheit 12 vorzugsweise über mehrere Kanäle, die jeweils Audiosignale von verschiedenen Mikrofonen verarbeiten. Jedem Mikrofon 5 ist wenigstens eine durch den Bordcomputer 7 individuell steuerbare Signalverzögerungseinheit 13 zuordenbar. Ein solcher Kanal kann jeweils einer in der Umgebung erkannten Person zugeordnet sein, indem Laufzeitunterschiede, mit denen die Lautäußerung an mehreren Mikrofonen 5 eintrifft, von deren Signalverzögerungseinheiten 13 kompensiert und die zeitversetzten Audiosignale dann in einer Summationseinheit 14 additiv überlagert werden, um ein kombiniertes Audiosignal zu erhalten, in dem Geräusche aus anderen Richtungen gegenüber der Lautäußerung der Person unterdrückt sind. Um die hierfür benötigten Zeitverzögerungen zu bestimmen, kann auf die anhand der Bilddaten ermittelten Azimutkoordinaten der Personen zurückgegriffen werden.

Weitere Kanäle können jeweils einem einzelnen Mikrofon 5 zugeordnet sein, um an dem betreffenden Mikrofon eintreffenden Schall ohne Gewichtung nach der Herkunftsrichtung aufzuzeichnen und zu verarbeiten.

Fig. 3 zeigt ein Arbeitsverfahren des Bordcomputers 7. Nach dem Hochfahren S1, bei noch stehendem Fahrzeug 1, beginnt dieser zunächst mit Hilfe der Kameras 3, die Umgebung 4 zu überwachen und zu entscheiden, ob die von den Kameras 3 gelieferten Bilddaten die Abbildung einer Person enthalten (S2). Solange dies nicht der Fall ist, kann das Fahrzeug auch keine Befehle empfangen und bleibt stehen. In der Umgebung der Fig. 2 gelingt die Identifizierung einer Person zweimal, für die Personen 8 und 9. Für jede identifizierte Person wird überprüft, ob sie als Benutzer legitimiert ist oder nicht. Dies kann in zwei Schritten geschehen. In einem ersten Schritt S3 wird geprüft, ob die Person ein vorgegebenes sichtbares Zeichen ihrer Legitimierung wie etwa eine vom Betreiber des Fahrzeugs 1 vorgeschriebene Kleidung trägt. Dies ist bei der Person 9 nicht der Fall, damit scheidet sie als legitimierter Benutzer aus (S4). In einem zweiten Schritt S5 wird durch Abgleich von in den Bildern der Kameras 3 erkennbaren Merkmalen des Gesichts der Person 8 mit in einer Datenbank des Bordcomputers 7 entschieden, ob die zu einem zum Führen des Fahrzeugs 1 berechtigten Personenkreis gehört. Wenn sich auch hier die Person als nicht legitimiert erweise (S4), werden der Schritte S2 so lange wiederholt, bis eine berechtigte Person in der Umgebung 4 erscheint und vom Bordcomputer 7 erkannt wird (S6).

Sobald eine Person als legitimierter Benutzer erkannt worden ist, bestätigt dies der Bordcomputer 1 durch Ausgabe einer Begrüßung, vorzugsweise unter Nennung des in der Datenbank hinterlegten Namens der Person, über einen Lautsprecher 15 (S7). So wird diese Person darüber informiert, dass der Bordcomputer 7 sie als Benutzer erkannt hat und auf ihre Befehle wartet.

Den erkannten Personen wird jeweils ein Audiokanal zugeordnet (S8). Dazu wird anhand von in Schritt S2 für jede Person 8, 9 - vorzugsweise relativ zur Fahrzeuglängsrichtung - ermittelten Azimutwinkeln θ₈, θ₉ entschieden, welche Mikrofone 5 als Empfänger von Lautäußerungen der betreffenden Personen in Betracht kommen und welches die Laufzeitunterschiede einer Schallwelle von der Person zu den jeweiligen Mikrofonen sind. Im Falle der Fig. 2 sind dies die Mikrofone 5₁, 5₂, 5₃ für die Person 8 und die Mikrofone 5₄, 5₅ für die Person 9. Für das Signal des zur Person 9 näheren Mikrofons 5₅ wird in dessen Signalverzögerungseinheit 13 entsprechend der Laufzeitdifferenz einer Schallwelle von der Person 9 zu den beiden Mikrofonen 5₄, 5₅ eine Zeitverzögerung eingestellt, das Signal des ferneren Mikrofons 5₄ bleibt unverzögert, und die so erhaltenen Signale werden in der Summationseinheit 14 überlagert. Entsprechend werden die Signale der Mikrofone 5₁, 5₂, 5₃ z.T. zeitverzögert und einander überlagert, so dass die Summationseinheit 14 zu jeder identifizierten Person 8, 9 ein für diese Person selektives Audiosignal an die Spracherkennungseinheit 12 liefert.

Die oben beschriebenen Schritte werden regelmäßig wiederholt, um zu berücksichtigen, wenn Personen neu in die Umgebung 4 eintreten oder früher erfasste Personen die Umgebung 4 verlassen bzw. um Veränderungen der Azimutwinkel der Personen zu berücksichtigen, die sich aus Bewegungen der Personen und des Fahrzeugs 1 ergeben.

In der Folge überwacht die Bildverarbeitungseinheit 10 die von den Kameras 5 gelieferten Abbilder der erkannten Personen 8, 9 auf das Vorkommen vorgegebener Gesten (S9). Die Gesten, auf die die Abbilder der Person 9 überwacht werden, umfassen minimal nur solche, die einen gewünschten Halt des Fahrzeugs 1 signalisieren, wie etwa eine Schreckbewegung oder eine Abwehrgeste wie etwa das Heben einer Hand. Ggf. können auch Gesten berücksichtigt werden, die eine gewünschte Bewegung des Fahrzeugs 1 von der Person 9 fort anzeigen.

Im Falle der Person 8 werden die Bilddaten auf das Vorkommen weiterer Gesten untersucht, etwa auf Zeigegesten wie etwa einen ausgestreckten Arm, im Fall der Fig. 1 in Richtung des von dem Fahrzeug 1 aufzunehmenden Erntewerkzeugs 2, auf Gesten, wie sie unter Autofahrern zum Unterstützen beim Rangieren, zum Verdeutlichen einer gewünschten Fahrtrichtung, von schnellerem oder langsamerem Fahren gebräuchlich sind, oder auch auf speziell vom Hersteller des Fahrzeugs definierte Gesten, die dem Fahrzeug 1 eine vom Benutzer 8 gewünschte Aktion wie etwa das Ankoppeln und Aufnehmen des Werkzeugs 2 anzeigen.

Gleichzeitig überwacht die Spracherkennungseinheit 12 die auf den verschiedenen Kanälen eintreffenden Audiosignale (S10). Auch hier kann sich die Überwachung des auf die Person 9 ausgerichteten Kanals auf eine Teilmenge des Befehlssatzes beschränken, auf den der Kanal des Benutzers 8 überwacht wird, insbesondere auf Haltebefehle beliebigen Wortlauts oder unartikulierte Rufe oberhalb einer vorgegebenen Lautstärkeschwelle. Die selektive Ausrichtung des Kanals auf die Person 9 mit Hilfe der Verzögerungseinheiten 13 ermöglicht es, diese Lautstärkeschwelle so niedrig anzusetzen, dass in der weiteren Umgebung lautere Geräuschquellen auftreten können, die anders als ein Ruf der Person 9 keinen Halt des Fahrzeugs 1 auslösen, weil ihr Geräusch aus einer Richtung kommt, für die der Kanal nicht oder nur wenig empfindlich ist.

Wenn die Bildverarbeitungseinheit 10 oder die Spracherkennungseinheit 12 in den erkannten Gesten oder den empfangenen Audiosignalen einen Haltebefehl erkennt (S11), so wird dieser umgehend ausgeführt. So kann z.B. die Person 9 das Fahrzeug 1 durch einen Zuruf oder eine unwillkürliche Schreckbewegung zum Stehen bringen, falls ein Befehl des Benutzers 8, von dessen Standpunkt aus die Person 9 durch das Fahrzeug 1 verdeckt ist, letzteres veranlasst, auf die Person 9 zuzufahren. Auch bestimmte, dem Benutzer 8 vorbehaltene Befehle, insbesondere Lenk-, Verzögerungs- oder Beschleunigungsbefehle in einem laufenden Rangiervorgang, können unmittelbar nach ihrer Erkennung ausgeführt werden.

Wenn ein anderer Befehl des Benutzers 8 erkannt worden ist, gibt der Bordcomputer 7 zunächst einen diesem Befehl zugeordneten Wortlaut aus (S12); erst wenn daraufhin der Benutzer 8 durch Sprache oder Geste die Richtigkeit der Erkennung bestätigt und dies vom Bordcomputer in Schritt S13 erfasst wird, wird der erkannte Befehl in Schritt S14 ausgeführt (S14) .

Denkbar ist auch, mit der Ausführung eines Befehls bereits dann zu beginnen, wenn er übereinstimmend in Sprache und Gesten des Benutzers 8 erkannt wird. Eine solche Übereinstimmung kann z.B. darin gesehen werden, dass der Benutzer gleichzeitig mit dem Arm auf das Werkzeug 2 weist und einen Befehl wie etwa "Maisgebiss aufnehmen" ausspricht. Eine zur Überwachung der Umgebung 4 eingesetzte Kamera 3 kann hier auch dazu dienen, die Position des Fahrzeugs 1 relativ zum Werkzeug zu vermessen, so dass der Bordcomputer 7 anhand der Bilddaten der Kamera 3 das Fahrzeug 1 an das Werkzeug 2 autonom in einer Orientierung heranmanövrieren kann, die zum Ankoppeln und Anheben des Werkzeugs 2 geeignet ist.

Während die Anfahrt des Fahrzeugs 1 auf öffentlichen Verkehrswegen zu einem zu beerntenden Feld vorzugsweise (zumindest gegenwärtig noch) unter der Kontrolle eines Fahrers stattfindet, sind die bei der Navigation auf dem Feld anfallenden Navigationsaufgaben einfacher und können bereits mit bekannten satellitenunterstützten Techniken autonom ausgeführt werden. Der Fahrer kann daher nach Erreichen des Feldes aus dem Fahrzeug 1 wieder aussteigen, diesem wie beschrieben mündlich und durch Gesten einen Befehl zum Abernten des Feldes erteilen und dann eine andere Aufgabe übernehmen, im hier betrachteten Fall, dass das Fahrzeug 1 ein Feldhäcksler ist, z.B. das Fahren eines Begleitfahrzeugs neben dem Feldhäcksler her, um von diesem kontinuierlich ausgestoßenes Häckselgut zu sammeln, oder das Fahren eines vollen Begleitfahrzeugs zwischen dem Feld und einer entfernten Erntegutsammelstelle wie etwa einem Silo.

### Bezugszeichenliste

- 1: Fahrzeug
- 2: Werkzeug
- 3: Kamera
- 4: Umgebung
- 5: Mikrofon
- 6: Fahrerkabine
- 7: Bordcomputer
- 8: Person (Benutzer)
- 9: Person
- 10: Bildverarbeitungseinheit
- 11: Berufskleidung
- 12: Spracherkennungseinheit
- 13: Signalverzögerungseinheit
- 14: Summationseinheit
- 15: Lautsprecher

## Patentansprüche

1. Fahrzeug (1), insbesondere fahrbare Landmaschine, mit einer Sensorik (3, 5) zum Erfassen menschlicher Kommunikationssignale und einer Steuereinheit (7) zum Steuern wenigstens der Bewegung des Fahrzeugs (1) anhand von durch die Sensorik (3, 5) erfassten Kommunikationssignalen, wobei die Sensorik (3, 5) am Fahrzeug (1) montiert ist, um die Kommunikationssignale unmittelbar vom Fahrzeug (1) aus zu erfassen, und einen außerhalb des Fahrzeugs (1) liegenden Erfassungsbereich (4) aufweist, **dadurch gekennzeichnet, dass** die Sensorik (3, 5) wenigstens einen bildgebenden Sensor (3) und/oder wenigstens einen akustischen Sensor (5) umfasst, wobei die Steuereinheit (7) eingerichtet ist, aus erfassten Kommunikationssignalen Steuerbefehle zu extrahieren, jeden Steuerbefehl in eine von wenigstens zwei Klassen zu klassifizieren und Steuerbefehle einer ersten Klasse unabhängig von der Identität einer Person (8, 9) auszuführen, die die Kommunikationssignale abgegeben hat, und Steuerbefehle einer zweiten Klasse nur auszuführen, wenn eine Person (8), die die Kommunikationssignale abgegeben hat, legitimiert ist, wobei die Steuereinheit (7) eingerichtet ist, die Legitimation einer Person (8, 9) anhand eines Merkmals einer von dem bildgebenden Sensor (3) gelieferten Abbildung der Person (8, 9) zu überprüfen und/oder die Legitimation einer Person (8, 9) anhand eines Merkmals ihrer Stimme zu überprüfen.

2. Fahrzeug nach Anspruch 1, **dadurch gekennzeichnet, dass** die Steuereinheit (7) eingerichtet ist, die Richtung und/oder Geschwindigkeit einer Bewegung des Fahrzeugs quantitativ zu steuern.

3. Fahrzeug nach einem der vorhergehenden Ansprüche, **dadurch gekennzeichnet, dass** die Sensorik (3, 5) wenigstens zwei akustische Sensoren (5) zum Liefern jeweils eines zeitaufgelösten Ausgangssignals umfasst und die Steuereinheit (7) eingerichtet ist, die Ausgangssignale mit wenigstens einem wählbaren Zeitversatz zu überlagern.

4. Fahrzeug nach Anspruch 3, **dadurch gekennzeichnet, dass** die Steuereinheit eingerichtet ist, den wenigstens einen Zeitversatz anhand der mit Hilfe eines bildgebenden Sensors (3) erfassten Position einer Person (8, 9) zu wählen.

5. Fahrzeug nach einem der vorhergehenden Ansprüche, **gekennzeichnet durch** eine Kommunikationsschnittstelle (15) zum Erzeugen von durch ein menschliches Sinnesorgan wahrnehmbaren Kommunikationssignalen.

6. Fahrzeug nach Anspruch 5, **dadurch gekennzeichnet, dass** die Steuereinheit (7) eingerichtet ist, aus erfassten Kommunikationssignalen Steuerbefehle zu extrahieren und einen extrahierten Steuerbefehl über die Kommunikationsschnittstelle (15) zu signalisieren.

7. Verfahren zum Betreiben eines Fahrzeugs nach Anspruch 1, mit den Schritten
- Erfassen eines menschlichen Kommunikationssignals mittels einer am Fahrzeug (1) montierten Sensorik (3, 5) aus einem außerhalb des Fahrzeugs (1) liegenden Erfassungsbereich (4),
- Steuern wenigstens der Bewegung des Fahrzeugs (1) anhand des erfassten Kommunikationssignals.

8. Computerprogramm-Produkt mit Programmcode-Mitteln, die einen Computer befähigen, als eine Steuereinheit (7) in einem Fahrzeug nach einem der Ansprüche 1 bis 6 zu arbeiten oder das Verfahren nach Anspruch 7 mittels der Steuereinheit und der Sensorik des Fahrzeugs nach einem der Ansprüche 1 bis 6 auszuführen.

## Claims

1. A vehicle (1), in particular a mobile agricultural machine, with a sensor system (3, 5) for detecting human communication signals and with a control unit (7) for controlling at least the movement of the vehicle (1) with the aid of communication signals detected by the sensor system (3, 5), wherein the sensor system (3, 5) is mounted on the vehicle (1) in order to detect the communication signals directly from the vehicle (1), and has a detection zone (4) which lies outside the vehicle (1), **characterized in that** the sensor system (3, 5) comprises at least one imaging sensor (3) and/or at least one acoustic sensor (5), wherein the control unit (7) is configured to extract control commands from detected communication signals, to classify each control command into one of at least two classes and to execute control commands of a first class independently of the identity of a person (8, 9) who has issued the communication signals, and to execute control commands of a second class only if a person (8) who has issued the communication signals is legitimized, wherein the control unit (7) is configured to check the legitimization of a person (8, 9) with the aid of a feature from an image of the person (8, 9) delivered by the imaging sensor (3) and/or to check the legitimization of a person (8, 9) with the aid of a feature of their voice.

2. The vehicle according to claim 1, **characterized in that** the control unit (7) is configured to control the direction and/or speed of a movement of the vehicle in a quantitative manner.

3. The vehicle according to one of the preceding claims, **characterized in that** the sensor system (3, 5) comprises at least two acoustic sensors (5) for respectively delivering a time-resolved start signal and the control unit (7) is configured to overlay the start signals with at least one time delay which can be selected.

4. The vehicle according to claim 3, **characterized in that** the control unit is configured to select the at least one time delay with the aid of the position of a person (8, 9) which has been detected with the aid of an imaging sensor (3).

5. The vehicle according to one of the preceding claims, **characterized by** a communication interface (15) for the production of communication signals which can be perceived by a human sensory organ.

6. The vehicle according to claim 5, **characterized in that** the control unit (7) is configured to extract control commands from detected communication signals and to signal an extracted control command via the communication interface (15).

7. A method for operating a vehicle according to claim 1,
with the steps of
- detecting a human communication signal from a detection zone (4) which lies outside the vehicle (1) by means of a sensor system (3, 5) mounted on the vehicle (1),
- controlling at least the movement of the vehicle (1) with the aid of the detected communication signal.

8. A computer program product with program code means which enable a computer to operate as a control unit (7) in a vehicle according to one of claims 1 to 6 or to execute the method according to claim 7 by means of the control unit and the sensor system of the vehicle according to one of claims 1 to 6.

## Revendications

1. Véhicule (1), en particulier machine agricole roulante, comprenant des moyens de capteurs (3, 5) pour recueillir des signaux de communication humains et comprenant une unité de commande (7) pour commander au moins le déplacement du véhicule (1) à l'aide de signaux de communication recueillis par les moyens de capteurs (3, 5), les moyens de capteurs (3, 5) étant montés sur le véhicule (1) afin de recueillir les signaux de communication directement à partir du véhicule (1), et comprenant une zone de couverture (4) située à l'extérieur du véhicule (1), **caractérisé en ce que** les moyens de capteurs (3, 5) incluent au moins un capteur d'imagerie (3) et/ou au moins un capteur acoustique (5), l'unité de commande (7) étant agencée pour extraire des instructions de commande à partir de signaux de communication recueillis, pour classifier chaque instruction de commande dans une d'au moins deux classes et pour exécuter des instructions de commande d'une première classe indépendamment de l'identité d'une personne (8, 9) qui a fourni les signaux de communication, et pour n'exécuter des instructions de commande d'une seconde classe que si une personne (8) qui a fourni les signaux de communication est habilitée, l'unité de commande (7) étant agencée pour contrôler l'habilitation d'une personne (8, 9) à l'aide d'une caractéristique d'une représentation de la personne (8, 9) fournie par le capteur d'imagerie (3) et/ou pour contrôler l'habilitation d'une personne (8, 9) à l'aide d'une caractéristique de sa voix.

2. Véhicule selon la revendication 1, **caractérisé en ce que** l'unité de commande (7) est agencée pour commander quantitativement la direction et/ou la vitesse d'un déplacement du véhicule.

3. Véhicule selon une des revendications précédentes, **caractérisé en ce que** les moyens de capteurs (3, 5) incluent au moins deux capteurs acoustiques (5) pour fournir respectivement un signal de sortie à résolution temporelle et l'unité de commande (7) est agencée pour superposer aux signaux de sortie au moins un décalage temporel sélectionnable.

4. Véhicule selon la revendication 3, **caractérisé en ce que** l'unité de commande est agencée pour sélectionner le au moins un décalage temporel sur la base de la position d'une personne (8, 9) recueillie à l'aide d'un capteur d'imagerie (3).

5. Véhicule selon une des revendications précédentes, **caractérisé par** une interface de communication (15) pour générer des signaux de communication perceptibles par un organe des sens humain.

6. Véhicule selon la revendication 5, **caractérisé en ce que** l'unité de commande (7) est agencée pour extraire des instructions de commande à partir de signaux de communication recueillis et pour signaler une instruction de commande extraite par l'intermédiaire de l'interface de communication (15) .

7. Procédé de fonctionnement d'un véhicule selon la revendication 1, avec les étapes consistant à
- recueillir un signal de communication humain au moyen de moyens de capteurs (3, 5) montés sur le véhicule (1) à partir d'une zone de couverture (4) située à l'extérieur du véhicule (1)
- commander au moins le déplacement du véhicule (1) à l'aide du signal de communication recueilli.

8. Produit de programme informatique comprenant des moyens de code de programme qui permettent à un ordinateur de fonctionner comme une unité de commande (7) dans un véhicule selon une des revendications 1 à 6 ou d'exécuter le procédé selon la revendication 7 au moyen de l'unité de commande et des moyens de capteurs du véhicule selon une des revendications 1 à 6.
